# EUROPÄISCHE PATENTSCHRIFT

(11) **EP 0 536 427 B1**
(45) Veröffentlichungstag und Bekanntmachung des Hinweises auf die Patenterteilung: **15.06.1994**
(21) Anmeldenummer: 91111470.0
(22) Anmeldetag: 10.07.1991
(51) Int. Cl.: F16L 37/00, F16L 47/00

(54) **Anbohrschelle für Fluidleitungen, insbesondere für Gas und Wasser**
Tapping clamp for pipes, especially for gas or water
Collier de forage pour conduites spécialement pour gaz ou eau

(43) Veröffentlichungstag der Anmeldung: 14.04.1993
(73) Patentinhaber: "agru" Alois Gruber Gesellschaft m.b.H., A-4540 Bad Hall (AT)
(72) Erfinder: Gruber, Alois, Sr., A-4540 Bad Hall (AT)
(74) Vertreter: Rupprecht, Klaus, Dipl.-Ing.

(56) Entgegenhaltungen:
- EP-A- 0 276 040
- DE-A- 2 702 547
- DE-A- 3 148 818
- FR-A- 1 561 422
- GB-A- 1 016 057
- NL-A- 7 102 028
- US-A- 4 112 944

## Beschreibung

Die Erfindung bezieht sich auf eine Anbohrschelle aus Kunststoff für druckführende Fluidleitungen aus Kunststoff, insbesondere für Gas und Wasser, mit einem Ober- und einem Unterteil sowie einem am Oberteil vorgesehenen Ansatz mit einer Führung zur Aufnahme eines Anbohrwerkzeugs und einem hiervon abzweigenden Stutzen für eine Anschlußleitung, wobei das Unterteil einenends am Oberteil angelenkt und andernends mit einem Verschlußelement versehen ist, das im geschlossenen Zustand der Anbohrschelle mit einem korrespondierenden Element des Oberteils zusammenwirkt.

Anbohrschellen der genannten Art sind grundsätzlich bekannt. Sie dienen in der Regel dazu, nachträglich an bereits bestehenden Kunststoff-Hauptleitungen Hausanschlußleitungen vorzusehen, also ein Fluid an einen Abnehmer abzuzweigen.

Die Hauptleitung oder das Hauptrohr wird dabei unter Zuhilfenahme der Anbohrschelle mit einem Schneidwerkzeug, meist einer Schneidschraube, unter Druck angebohrt. Nach Entfernen des Schneidwerkzeugs strömt dann das Fluid durch die gebohrte Ausnehmung in den Kanal des Schneidwerkzeugs und von dort in einen abzweigenden Stutzen, von wo aus es in die Anschlußleitung und zum Verbraucher strömt.

Die Anbohrschellen weisen grundsätzlich ein Ober- sowie ein Unterteil auf, mit denen sie die Hauptleitung umschließen und an ihr befestigt werden. Es hat sich gezeigt, daß die Schellen bei ihrer Anbringung an der Hauptleitung relativ umständlich handhabbar sind und oftmals nur unter Mitwirkung eines Helfers zuverlässig an der in Aussicht genommenen Einbaustelle angebracht werden können.

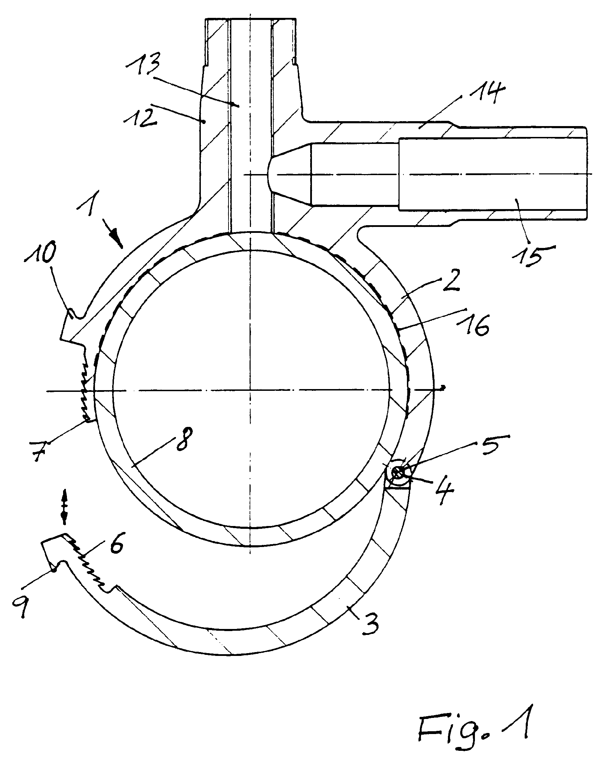

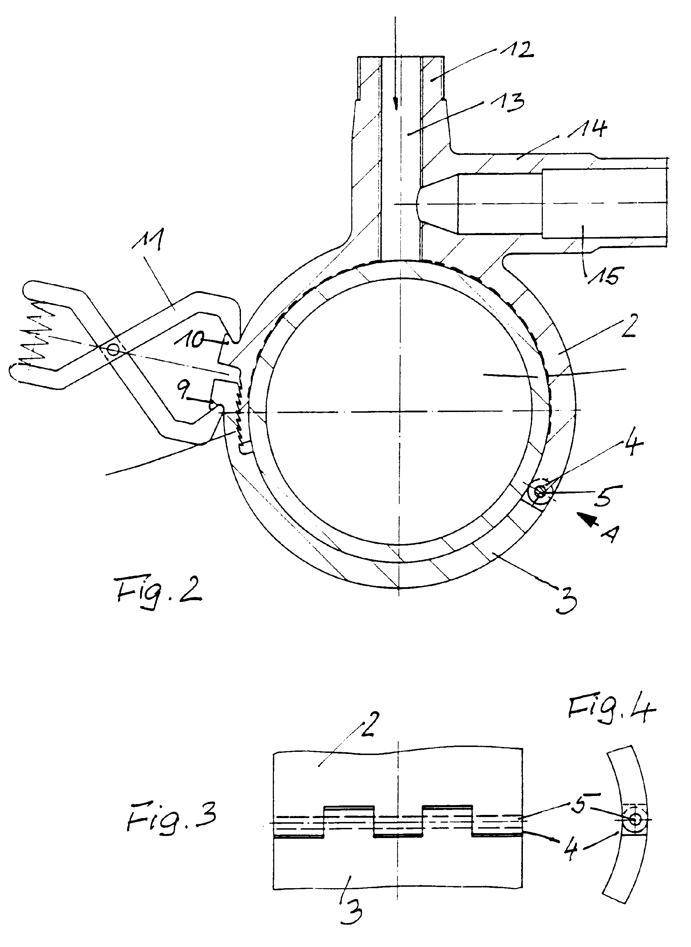

Die Anbohrschellen gemäß dem Dokument GB-A-1016 057, Fig. 1, 3, 4 und 5, entsprechen diesem Stand der Technik und weisen den beschriebenen Nachteil auf, daß sie nicht zuverlässig haltend von einer Person auf der Hauptleitung für den eigentlichen Montageprozeß angeordnet werden können, da sie lediglich aufgesetzt werden. Ihre Oberteile mit den Anbohrstutzen umfassen die Hauptleitung in jedem Fall nicht einmal zur Hälfte. Bei sämtlichen Ausführungsbeispielen mit Ausnahme dem nach Fig. 4 müssen die Unterteile über Klammern oder Muttern mit dem Oberteil verschraubt werden, was in jedem Fall eine umständliche Handhabung und Montage bedeutet. Das Ausführungsbeispiel gemäß Fig. 4 - welches im übrigen mit dem Anmeldungsgegenstand insofern nicht vergleichbar ist, als es keinen Anbohrstutzen aufweist - zeigt ein Unterteil, das über eine Gelenkverbindung mit dem Oberteil verbunden werden soll. Auch hier trifft wiederum zu, daß das Oberteil nach seinem ersten Aufsetzen auf die Hauptleitung keineswegs festgelegt ist und somit bei der weiteren Handhabung der Anbohrschelle zu einer aufwendigen Handhabung Anlaß gibt. Der entscheidende Nachteil dieser Ausführungsform besteht aber darin, daß sie fertigungsmäßig nur vergleichsweise teuer herzustellen ist, insbesondere was den erforderlichen Hebelverschluß anbelangt. Dieser muß aufwendig hergestellt werden. Es sind zwei zusätzliche Gelenkverbindungen erforderlich, einmal am Unterteil eine Scharnierverbindung mit einem Drehbolzen sowie die am Hebel vorgesehene Gelenkverbindung. Dieser aufwendige Herstellungsprozeß ist um so bedeutungsvoller, als der Hebelverschluß jeweils an jeder Anbohrschelle verbleibt und somit quasi verloren ist.

Bei dem Gegenstand der Entgegenhaltung EP-A-0 276 040 handelt sich um ein preisgünstig herzustellendes T-Stück für Drainageleitungen. Dies sind dünnwandige, flexible Leitungen, die zu Entwässerungszwecken um Gebäude herum verlegt werden und welche in der Regel auf jeder Baustelle anzutreffen sind. Sie sind durchgehend wellenförmig und perforiert ausgebildet, so daß Feuchtigkeit in sie eindringen und innen abgeleitet werden kann. Derartige wellenförmige Rohre (Spalte 1, Zeilen 40 bis 43, der Entgegenhaltung) gilt es, mit dem beschriebenen T-Stück zu verbinden. Eine dichte Verbindung zwischen T-Stück und Drainageleitung einerseits sowie Hauptteil und Abzweigungsteil des T-Stücks andererseits ist weder möglich noch erwünscht, da ja Feuchtigkeit in das Innere dieses Rohrsystems zwecks Abführung eindringen soll.

Die Aufgabe der Erfindung besteht somit darin, eine Anbohrschelle der eingangs genannten Art zu schaffen, die grundsätzlich von einer einzigen Person ohne besondere Hilfsmittel oder Haltevorrichtungen zuverlässig am vorgesehen Einbauort angeordnet und befestigt werden kann und die darüber hinaus vergleichsweise preiswert in ihrer Herstellung ist.

Diese Aufgabe ist gemäß der Erfindung dadurch gelöst, daß das Oberteil die Fluidleitung mit etwa 2/3 ihres Umfangs und das Unterteil die Fluidleitung mit etwa 1/3 ihres Umfangs umfaßt und das Verschlußelement des Unterteils ein sägezahnartiges Einrastelement ist, das mit einem korrespondierenden sägezahnförmigen Einrastelement des Oberteils zusammenwirkt, und daß am Oberteil sowie am Unterteil der Schelle im Bereich der Einrastelemente je ein Vorsprung zum Ansetzen einer Preßzange vorgesehen ist.

Mit der erfindungsgemäßen Ausbildung einer solchen Anbohrschelle wird zunächst erreicht, daß das Unterteil zum einen relativ weit aufgeklappt werden kann, wobei es jedoch immer noch mit dem Oberteil verbunden ist, so daß nach Aufsetzen des Oberteils auf das Hauptrohr das Unterteil an seinem einen Ende, dem Scharnier, bereits in seiner einen Endstellung vorgesehen ist. Durch einfaches Zuklappen des Unterteils in Richtung zum Oberteil und um das Hauptrohr herum, kommt es dann zu einem Umschließen des letzteren mit der Anbohrschelle. Der Innendurchmesser der Schelle ist auf den Außendurchmesser des Hauptrohres abgestimmt, sie sind also praktisch gleich. Auf diese Weise kommt es dann zu einem Eingriff der Einrastelemente des Ober- und des Unterteils, wodurch die Schelle dann bereits zuverlässig auf dem Hauptrohr festgelegt ist.

Ein besonderer Vorteil der Erfindung besteht darin, daß das Oberteil der Anbohrschelle die Hauptrohrleitung mit etwa 2/3 ihres Umfanges umfaßt. Durch aufbiegen des Oberteils der Schelle, die aus federndem Kunststoff gefertigt ist, kann das Oberteil, wie erwähnt, auf die Hauptrohrleitung aufgesetzt werden. Es federt sodann in seine Ursprungsstellung zurück, wodurch es zu dem beschriebenen festen Sitz des Oberteils und somit der gesamten Schelle auf dem Hauptrohr kommt. Die erfindungsgemäße Anbohrschelle ist vergleichsweise preiswert herzustellen, da insbesondere auf aufwendige Verschließmechanismen an den Einrastelementen verzichtet werden kann.

Besonders vorteilhaft ist es, wenn nach einem anderen Merkmal der Erfindung das Einrastelement des Oberteils an einem Fortsatz des Oberteils vorgesehen ist, das geringeren Querschnitt als das Oberteil aufweist und Teil des die Hauptrohrleitung umfassenden Oberteils bildet. Dieses Ende geringeren Querschnitts des Oberteils kann somit wegen seines verringerten Querschnitts besonders leicht beim Aufsetzen des Oberteils auf die Hauptrohrleitung aufgebogen werden. Es hat sich gezeigt, daß seine Federkraft trotzdem ausreicht, um das Oberteil im aufgesetzten Zustand zuverlässig an der Hauptleitung zu halten.

Auch liegt es im Rahmen der Erfindung, wenn im Bereich der inneren Oberfläche des Oberteils ein elektrisches Widerstandsheizelement zum Verschweißen des Oberteils mit der Fluidleitung vorgesehen ist.

Weitere Einzelheiten, Merkmale und Vorteile der Erfindung ergeben sich aus der folgenden Beschreibung eines bevorzugten Ausführungsbeispiels sowie anhand der schematischen Zeichnung.

Es zeigen:
- Fig. 1: die erfindungsgemäße Rohrschelle mit einer Hauptleitung im Querschnitt im noch geöffneten Zustand;
- Fig. 2: den Gegenstand der Fig. 1 im geschlossenen, d.h. verrasteten Zustand mit eingesetzter Preßzange;
- Fig. 3: eine Detailansicht in Richtung des Pfeiles A der Scharnierverbindung zwischen Ober- und Unterteil der Schelle;
- Fig. 4: eine Seitenansicht des Gegenstands der Fig. 3 und
- Fig. 5: eine Seitenansicht des Gegenstands der Fig 1 und 2 in geschlossenem Zustand bei abgenommener Preßzange.

Eine Anbohrschelle 1 aus Kunststoff besteht grundsätzlich aus einem Oberteil 2 sowie einem Unterteil 3. Letztere sind über ein Scharnier 4 miteinander gelenkig verbunden. Eine Ausführungsform des Scharniers ist in den Fig. 3 und 4 gezeigt. Ansätze des Oberteils 2 greifen in korrespondierende Ausnehmungen des Unterteils 3 und umgekehrt ein. Die eigentliche Drehverbindung wird durch einen Stift 5 geschaffen, der diese Ansätze von Ober- und Unterteil 2, 3 durchsetzt; vgl. Fig. 3 und 4.

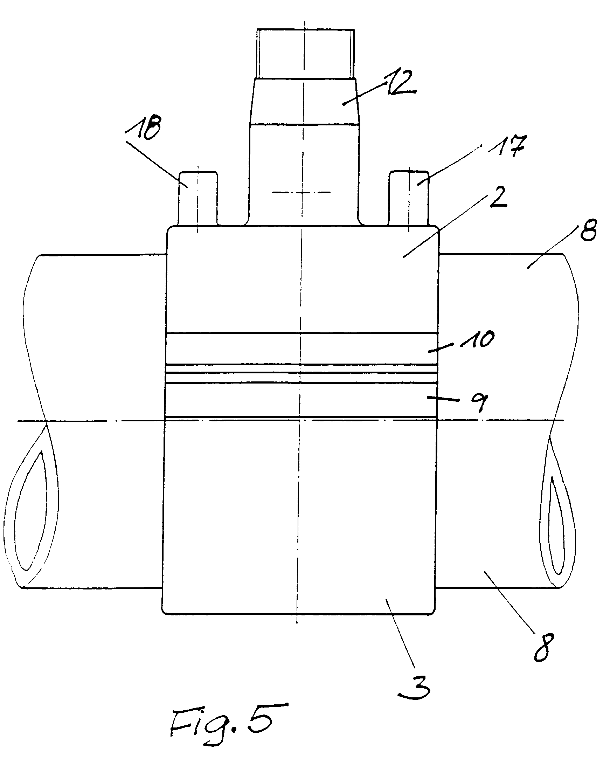

Aus den Fig. 1 und 2 ergibt sich, daß das Oberteil 2 der Anbohrschelle 1 eine Hauptleitung oder ein Hauptrohr 8 über etwa 2/3 seines Umfangs umfaßt. Die aus federndem Kunststoff hergestellte Anbohrschelle 1, insbesondere deren Oberteil 2, kann deshalb unter Aufbiegen an der gewünschten Stelle auf die Hauptleitung 8 aufgesetzt werden. Sie ist dann praktisch automatisch festgelegt oder festgeklemmt. Dennoch kann sie unter etwas erhöhtem Kraftaufwand immer noch gedreht oder in Längsrichtung des Hauptrohres 8 verschoben werden. Ist die Anbohrschelle sodann an der gewünschten Stelle angeordnet, schließt man sie durch Zuklappen des Unterteils 3 gemäß Fig. 1 in Richtung zum Hauptrohr 8 hin und unter Verschwenken um den Stift 5. Anbohrschelle 1 und Hauptrohr 8 sind hinsichtlich ihres Innen- bzw. Außendurchmessers aufeinander abgestimmt. Es kommt sodann zu einem zuverlässigen Verschluß der Anbohrschelle durch Verrasten der Einrastelemente 6 und 7 des Unter- bzw. Oberteils 3 und 2.

Wie in Fig. 2 gezeigt, weist das Unterteil 3 einen Ansatz 9 und das Oberteil 2 einen Vorsprung 9 bzw. 10 auf, die so ausgebildet sind, daß sie zuverlässig zum Ansetzen einer Preßzange 11 herangezogen werden können. Unter Zuhilfenahme dieser Preßzange ist es möglich, die Anbohrschelle 1 besonders eng am Hauptrohr 8 festzuziehen und somit jeglichen Luftspalt zwischen Schelle und Hauptrohr zu vermeiden. Besonders begüngstigt wird diese Möglichkeit durch die relativ kleine Abmessungen aufweisenden Einrastelemente 6 und 7. so daß nur ein vergleichsweise geringer Weg zwischen den Vorsprüngen 9 und 10 aufeinander zu überwunden werden muß, vgl. Fig. 2, um die Einrastelemente um eine Zahnlänge aufeinander zuzubewegen.

Die Vorsprünge 9 und 10 sind weiterhin so ausgebildet, daß in geschlossenem Zustand gemäß Fig. 2 ein Zwischenraum zwischen ihnen verbleibt. Dort kann ein Hebelwerkzeug angesetzt werden, um die Anbohrschelle wierder lösen zu können, sofern hierzu eine Notwendigkeit bestehen sollte (ene sie mit dem Hauptrohr verschweißt ist und nach Entfernen der Preßzange 11).

Wie sich aus den Fig. 1, 2 und 5 ergibt, ist das Oberteil 2 der Anbohrschelle 1 mit einem Ansatz 12 zur Aufnahme einer Führung 13 für ein Anbohrwerkzeug versehen. Dieses Anbohrwerkzeug wird durch die Führung gesteckt und bewirkt eine nicht gezeigte Ausnehmung im Hauptrohr 8. Hierdurch wird eine Verbindung vom Hauptrohr 8 zu dieser Führung 13 und einem hiervon abzweigenden Stutzen 14 für eine Anschlußleitung 15 hergestellt. Von der Anschlußleitung 15 erstreckt sich dann eine nicht gezeigte Verbindungsleitung, beispielsweise zu einem Hausanschluß oder einem anderen Verbraucher. Auf diese Weise kann im Hauptrohr 8 strömendes Fluid, insbesondere Wasser oder Gas, nach Verschließen der Führung 13 zum Verbraucher strömen.

Vor dem soeben beschriebenen Herstellen der Verbindung wird jedoch in der Regel die Anbohrschelle 1 mit dem Hauptrohr 8 verschweißt. Hierzu ist, wie sich wiederum aus den Fig. 1 und 2 ergibt, im Bereich der inneren Oberfläche des Oberteils 2 ein elektrisches Widerstandselement vorgesehen. Dieses ist dort entweder direkt an der Oberfläche oder in deren Bereich vorhanden. Es kann beispielsweise aus einem mäanderförmig verlegten Draht oder einem Drahtnetz aus elektrischem Widerstandsdraht bestehen. Durch Zuführen von elektrischem Strom werden Hauptrohr 8 und Oberteil 2 im Bereich des Widerstandselementes 16 erweicht. Es kommt hierbei zu einem Aufschmelzen und Verschweißen des Kunststoffs von Hauptrohr 8 und Oberteil 2. In üblicher Weise wird die Stromzufuhr unterbrochen, sobald es zu dem erwähnten Aufschmelzen oder einem Erweichen des Kunststoffs gekommen ist. Nach Erstarren des erweichten Kunststoffes ist eine fluiddichte Verbindung der Anbohrstelle im Bereich der anschliessend herzustellenden Ausnehmung an der Führung 13 gewährleistet.

Die Stromzufuhr zum Widerstandselement 16 erfolgt über Anschlußbuchsen 17, 18, deren Lage sich aus der Fig. 5 ergibt.

Nicht dargestellte Verbindungsdrähte des Widerstandselementes 16 sind zu diesen Buchsen geführt. Die erfindungsgemäßen Anbohrschellen können in den unterschiedlichsten Dimensionen gefertigt werden, insbesondere mit Durchmessern von 40, 50, 63, 90, 110, 125, 160, 200, 225, 250, 280 und 315 mm in den Druckstufen PN6, PN10 und PN16. Als Kunststoff kommt insbesondere PEHD in Betracht.

## Patentansprüche

1. Anbohrschelle (1) aus Kunststoff für druckführende Fluidleitungen (8) aus Kunststoff, insbesondere für Gas und Wasser, mit einem Ober- und einem Unterteil (2, 3) sowie einem am Oberteil (2) vorgesehenen Ansatz (12) mit einer Führung (13) zur Aufnahme eines Anbohrwerkzeugs und einem hiervon abzweigenden Stutzen (14) für eine Anschlußleitung (15), wobei das Unterteil (3) einenends am Oberteil (2) angelenkt und andernends mit einem Verschlußelement versehen ist, das im geschlossenen Zustand der Anbohrschelle (1) mit einem korrespondierenden Element des Oberteils (2) zusammenwirkt, dadurch gekennzeichnet, daß das Oberteil (2) die Fluidleitung (8) mit etwa 2/3 ihres Umfangs und das Unterteil (3) die Fluidleitung (8) mit etwa 1/3 ihres Umfangs umfaßt und das Verschlußelement des Unterteils (3) ein sägezahnartiges Einrastelement (6) ist, das mit einem korrespondierenden sägezahnförmigen Einrastelement (7) des Oberteils (2) zusammenwirkt, und daß am Oberteil (2) sowie am Unterteil (3) der Schelle (1) im Bereich der Einrastelemente (6, 7) je ein Vorsprung (9, 10) zum Ansetzen einer Preßzange (11) vorgesehen ist.

2. Anbohrschelle nach Anspruch 1, dadurch gekennzeichnet, daß das Einrastelement (7) des Oberteils (2) an einem Fortsatz des Oberteils (2) vorgesehen ist, der geringeren Quer schnitt als das Oberteil (2) aufweist und Teil des die Fluidleitung (8) umfassenden Oberteils (2) bildet.

3. Anbohrschelle nach Anspruch 1 oder 2, dadurch gekennzeichnet, daß im Bereich der inneren Oberfläche des Oberteils (2) ein elektrisches Widerstandsheizelement zur Verschweißung des Oberteils mit der Fluidleitung (8) vorgesehen ist.

## Claims

1. Plastic tapping clamp (1) for plastic pressure-carrying fluid lines (8), in particular for gas and water, having a top part and a bottom part (2, 3) and an extension (12) which is provided on the top part (2) and has a guide (13), for receiving a tapping tool, and a connection stub (14) which branches off from said guide and is intended for a connection line (15), the bottom part (3) being articulated, at one end, on the top part (2) and being provided, at the other end, with a closure element which, in the closed state of the tapping clamp (1), interacts with the corresponding element of the top part (2), characterized in that the top part (2) encloses approximately 2/3 of the circumference of the fluid line (8) and the bottom part (3) encloses approximately 1/3 of the circumference of the fluid line (8), and the closure element of the bottom part (3) is a saw-tooth-like latching element (6) which interacts with the corresponding saw-tooth-shaped latching element (7) of the top part (2), and in that there is provided, on the top part (2) and on the bottom part (3) of the clamp (1), in the region of the latching elements (6, 7), in each case one protrusion (9, 10) for the attachment of pressing tongs (11).

2. Tapping clamp according to Claim 1, characterized in that the latching element (7) of the top part (2) is provided on a continuation of the top part (2), which exhibits a smaller cross-section than the top part (2) and forms part of the top part (2) enclosing the fluid line (8).

3. Tapping clamp according to Claim 1 or 2, characterized in that there is provided, in the region of the inner surface of the top part (2), an electric resistance heating element for welding the top part to the fluid line (8).

## Revendications

1. Collier (1) en matière plastique servant au perçage de canalisation (8) en plastique transportant des fluides sous pression, en particulier du gaz et de l'eau, et qui comprend une partie inférieure (3) et une partie supérieure (2), cette dernière portant un appendice (12) équipé d'un guidage (13) pour un outil de perçage et formant ramification avec une tubulure (14) destinée à une conduite de raccordement (15), la partie inférieure (3) du collier étant articulée, par une extrémité, à la partie supérieure (2) tandis qu'à l'autre extrémité elle est équipée d'un élément de fermeture qui coopère avec un élément correspondant de la partie supérieure (2) pour assurer la fermeture du collier, caractérisé en ce que la partie supérieure (2) et la partie inférieure (3) entourent la canalisation de fluide (8) sur environ les deux tiers et le tiers, respectivement, de la périphérie de celle-ci tandis que l'élément de fermeture de la partie inférieure (3) porte un élément de blocage à dents de scie (6) qui coopère avec un élément de blocage analogue correspondant (7) de la partie supérieure (2), chacune des parties (2) et (3) du collier présentant, au niveau des éléments de blocage (6, 7) une partie en relief (9, 10) pour prise par une pince de serrage (11).

2. Collier de perçage selon la revendication 1, caractérisé en ce que l'élément de blocage (7) de la partie supérieure (2), est prévu sur un prolongement de la partie supérieure (2), de section réduite par rapport à celle-ci et forme la partie de la partie supérieure (2) entourant la canalisation de fluide (8).

3. Collier de perçage selon la revendication 1 ou 2, caractérisé en ce qu'un élément chauffant par résistance électrique est prévu sur la face interne de la partie supérieure (2), afin de souder cette partie sur la canalisation de fluide (8).
